(19) Europäisches Patentamt / European Patent Office / Office européen des brevets

(11) **EP 4 769 145 A1**

(12) **DEMANDE DE BREVET EUROPEEN**

(43) Date de publication:
**01.07.2026 Bulletin 2026/27**

(21) Numéro de dépôt: **25227499.8**

(22) Date de dépôt: **29.12.2025**

(51) Classification Internationale des Brevets (IPC):
*G06F 9/50* (2006.01)

(52) Classification Coopérative des Brevets (CPC):
**G06F 9/5061**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **30.12.2024 FR 2415381**

(71) Demandeur: **THALES**
**92190 Meudon (FR)**

(72) Inventeurs:
• WION, Adrien
  **92622 GENNEVILLIERS CEDEX (FR)**
• MONTENOT, Jean-Marc
  **92622 GENNEVILLIERS CEDEX (FR)**
• SCHOLLER, Franck
  **92622 GENNEVILLIERS CEDEX (FR)**
• SOULIÉ, Antoine
  **92622 GENNEVILLIERS CEDEX (FR)**

(74) Mandataire: **Lavoix**
**2, place d'Estienne d'Orves**
**75441 Paris Cedex 09 (FR)**

(54) **INFRASTRUCTURE DE FÉDÉRATION DE SERVICES ET PROCÉDÉ ASSOCIÉ**

(57) Cette infrastructure (100), qui fédère des ressources partagées par des partenaires (MNP1, MNP2, MNP3) opérant différentes infrastructures locales, comporte, dans chaque infrastructure locale, une entité locale (10, 20, 30) pour contrôler les ressources locales et une entité centrale (40). L'entité centrale tient à jour un catalogue des ressources partagées et un engagement de chaque ressource partagée ; calcule une planification de réalisation d'une mission ; et déploie une configuration correspondant à la planification. Chaque entité locale tient à jour un catalogue des ressources locales et un engagement de chaque ressource locale partagée ; informe l'entité centrale d'un engagement pouvant être pris sur chaque ressource locale partagée ; et paramètre chaque ressource locale partagée conformément à la configuration reçue de l'entité centrale.

FIG.1

## Description

La présente invention concerne les infrastructures informatiques et procédés de fédération de services.

La fédération de services permet de regrouper des services partagés par les différents partenaires d'une coalition en vue de la réalisation d'une mission commune.

Un service est l'ensemble des ressources, matérielles et logicielles, mises en œuvre et convenablement paramétrées pour offrir tout ou partie d'une fonctionnalité particulière.

Il s'agit par exemple d'un service de transit (réseau de communication, sécurisation des échanges, ...) ou d'un service d'application (exécution de l'instance d'une application, base de données, hébergement dans un centre de données, ...).

Une ressource est un moyen, matériel ou logiciel, qui, une fois convenablement paramétré, permet d'effectuer une tâche élémentaire entrant dans la réalisation d'un service.

Une mission relève d'un type particulier de finalité, comme par exemple une mission bureautique, une mission d'observation radar, une mission d'assistance médicale, etc.

Une mission est une somme de services permettant à chaque utilisateur d'obtenir un attendu.

Ainsi par exemple, une mission d'assistance médicale consiste à fournir à un utilisateur - chirurgien une pré-analyse radiologique d'un patient. La mission regroupe alors par exemple un service d'application d'acquisition d'image mettant en œuvre un appareil de radiologie adapté, un service de transit fondé sur un réseau de communication, et un service d'application d'analyse d'images exécutant un algorithme avancé d'analyse des images reçues depuis l'appareil de radiologie, via le réseau de communication.

Dans une coalisation de partenaires, chaque partenaire - MNP (« Mission Network Participant »), pouvant notamment appartenir à des pays différents ou des institutions différentes d'un même pays, met à la disposition de la coalisation une partie de ses services et des ressources sous-jacentes pour assurer ce service.

Un MNP peut partager des services de transit pour l'acheminement de données (typiquement un réseau de communication national) et/ou des services d'application pour la génération de données (typiquement l'exécution d'une application hébergée dans un centre de données).

Les différents services qui sont partagés entre les MNPs d'une coalition constituent une fédération de services.

Actuellement, pour la réalisation d'une mission en utilisant les services d'une fédération de services, ou mission « commune », une phase amont de planification de la mission commune est réalisée.

La planification, qui est réalisée par un opérateur, consiste à définir une configuration de la fédération de services. Une configuration définit les services qui, parmi l'ensemble des services partagés par les différents MNPs, sont sélectionnés et réservés pour la réalisation effective de la mission commune. Cette configuration porte à la fois sur les ressources que partage chaque MNP et sur le paramétrage de ces ressources pour répondre à l'attendu de chaque utilisateur conformément à la mission commune.

L'attendu s'entend selon une pluralité de contraintes, non seulement en termes de qualité de service, mais également en termes de priorité des flux, de criticité des flux, etc.

Une configuration sous-entend par conséquent la définition d'un ensemble de paramètres comme l'adresse IP d'une machine cible exécutant une instance d'une application requise par l'utilisateur, une clé de chiffrement pour sécuriser les échanges, une bande passante et une latence pour satisfaire une qualité de service demandée, le type des données échangées,...

L'opérateur en charge de la planification détermine une configuration initiale pour réaliser la mission commune, en tenant compte des services que chaque MNP indique pouvoir partager.

Chaque MNP est ensuite interrogé pour savoir s'il peut effectivement allouer le service qu'il a partagé, i.e. l'ensemble des ressources sous-jacentes à ce services, avec le paramétrage prévu par la configuration initiale.

Dans la négative, l'opérateur de planification cherche un autre MNP pouvant fournir le service requis, ou à défaut modifie la configuration initiale pour chercher à obtenir des MNPs les services nécessaires.

Dans l'affirmative, le MNP s'engage à fournir le service requis pendant toute la durée de la phase de réalisation de la mission, c'est-à-dire à réserver les différentes ressources sous-jacentes paramétrées conformément au paramétrage de la configuration validée.

La planification nécessite par conséquent un ensemble d'échanges entre l'opérateur de planification et les partenaires coalisés afin d'aboutir à une configuration finale.

C'est un travail long, qui est essentiellement réalisé manuellement.

De plus, un opérateur de planification en charge d'une mission commune ne connait pas les éventuels autres opérateurs de planification, en charge d'autres missions commune, et qui peuvent aussi souhaiter vouloir utiliser certains des services partagées, notamment les services de transit.

Il peut donc y avoir conflit entre plusieurs configuration élaborées au même moment par différents opérateurs de planification.

De plus, la configuration finale, déployée sur la fédération de services, est figée. Elle n'admet aucune modification durant la phase de réalisation de la mission commune.

Dit autrement, tout évènement affectant un MNP durant la phase de réalisation de la mission commune et ayant pour conséquence que ce MNP ne peut plus offrir une ressource selon l'engagement initialement pris, nécessite une nouvelle itération immédiate de la phase de planification.

En effet, si par exemple un MNP ne peut plus offrir une ressource entrant dans un service de transit de la mission commune, dégradant ainsi la bande passante de sorte qu'elle ne respecte plus l'engagement initial du MNP, la congestion que cela entraine peut affecter les services d'application associés à la mission commune, qui sont offerts par ce même MNP ou par un autre MNP (un réseau de transit passant de 100% à 50% de bande passante ne peut plus répondre au besoin des services d'application, qui continuent cependant d'essayer d'utiliser le service de transit comme si de rien n'était).

Les utilisateurs n'ont alors plus accès aux services attendus tant qu'une nouvelle planification n'a pas été déployée.

Cela ne répond donc aucunement aux contraintes opérationnelles, notamment dans le cas de MNPs soumis à des contraintes fortes et qui évoluent à chaque instant. Un MNP peut par conséquent être forcé à rompre l'engagement initial de fournir certaines ressources et/ou un certain paramétrage de ces ressources.

Le but de la présente invention est de résoudre ce problème, en proposant une infrastructure et des procédés adaptés pour réaliser une configuration dynamique d'une fédération de services en vue de la réalisation d'une mission commune.

Pour cela l'invention a pour objet une infrastructure de fédération de services comportant des ressources partagées par une pluralité de partenaires formant une coalition, chaque partenaire opérant une infrastructure locale comportant une pluralité de ressources locales, un partenaire décidant de partager, à un instant courant, certaines desdites ressources locales avec les autres partenaires de manière à former l'infrastructure de fédération de services, chaque infrastructure locale comportant une entité locale adaptée pour contrôler un état de chaque ressources locale, l'infrastructure de fédération de services comportant, en outre, une entité centrale, qui est en communication avec chacune des entités locale des infrastructures locales, l'entité centrale étant adaptée pour : tenir à jour un catalogue des ressources partagées à l'instant courant par chaque partenaire, un engagement de chaque ressource partagée, et un état courant de chaque ressource partagée en échangeant avec les entités locales ; calculer une planification courante, à partir du contenu du catalogue des ressources partagées, permettant de réaliser une mission commune prédéfinie à partir des ressources partagées à l'instant courant et de l'état courant des ressources partagées ; et, déployer une configuration correspondant à la planification courante en demandant, pour chaque ressource partagée entrant dans la configuration courante, à l'entité locale responsable de ladite ressource partagée de paramétrer ladite ressource partagée selon la configuration, chaque entité locale étant adaptée pour : tenir à jour un catalogue des ressources locales, partagées et non partagées, à l'instant courant, un engagement de chaque ressource locale partagée, et un état courant de chaque ressource locale ; informer l'entité centrale d'un engagement pouvant être pris sur chaque ressource locale partagée ; et, paramétrer chaque ressource locale partagée conformément à la configuration reçue de l'entité centrale.

Suivant des modes particuliers de réalisation, l'infrastructure comporte une ou plusieurs des caractéristiques suivantes, prises isolément ou suivant toutes les combinaisons techniquement possibles :

- un service est l'ensemble des ressources, matérielles et logicielles, mises en œuvre et convenablement paramétrées pour offrir tout ou partie d'une fonctionnalité particulière, un service étant soit un service de transit soit un service d'application.
- l'entité centrale et chaque entité locale est un système informatique du type gestion et de contrôle de services, adossé à un catalogue de ressources.
- un engagement d'une ressource partagée est un accord de niveau de service caractérisé par au moins une grandeur quantitative.
- ladite au moins une grandeur quantitative est sélectionnée parmi : une capacité minimum et une capacité maximum de bande passante, une qualité de service, une latence, une criticité, une sécurité, une priorisation, une capacité de calcul, et une capacité mémoire.
- l'entité centrale calcule une planification courante en exécutant un algorithme du type algorithme d'ingénierie de trafic sous contrainte.
- l'algorithme prend en entrée au moins une topologie de services candidate et un ensemble de flux à acheminer entre un service source et un service destinataire.
- l'algorithme prend également en entrée un paramètre définissant un nombre de chemins alternatifs à considérer sur la topologie de services candidate lors de la recherche d'une solution d'acheminement de chaque flux.
- la mission commune définit, pour chaque utilisateur de l'infrastructure de fédération de services un attendu.
- la planification courante regroupe une topologie de services et pour chaque flux un engagement global.
- chaque entité locale comporte un élément d'interface et un élément de contrôle, l'élément de contrôle étant en charge d'orchestrer les ressources locales du partenaire et l'élément d'interface contrôlant l'élément de contrôle et échangeant avec l'entité centrale et éventuellement avec les entités locales des autres partenaires.

L'invention a également pour objet un procédé de déploiement d'une configuration courante dans une infrastructure de fédération de services conforme à l'infrastructure précédente, le procédé comportant les étapes de : l'entité centrale interroge chaque entité locale en lui demandant de lui transmettre l'ensemble des ressources pouvant être mis à disposition de la fédération de services ; en réponse, l'entité locale de chaque partenaire, indique l'ensemble des ressources qu'il est prêt à partager, et pour chaque ressource partagée, un engagement maximal possible ; l'entité centrale stocke les informations reçues dans son catalogue ; l'entité centrale calcule une planification permettant de remplir la mission commune ; l'entité centrale demande à chaque entité locale de chaque partenaire si elle peut déployer la configuration correspondant à la planification calculée ; si l'entité locale peut effectivement s'engager à réserver la ressource locale selon l'engagement requis, alors l'entité locale répond positivement à l'entité centrale et si l'entité locale ne peut pas s'engager à réserver la ressource locale selon l'engagement requis, l'entité locale répond négativement à l'entité centrale, tout en indiquant un nouvel engagement maximal ; en cas de réponse négative, l'entité centrale réitère met à jour la planification en fonction du nouvel engagement maximal ; une fois que l'entité centrale a reçu une réponse positive de chacune des entités locales, l'entité centrale commande chaque entité locale pour déployer la configuration correspondant à la planification finale et lui demandant de lui indiquer l'ensemble des informations permettant la connexion aux ressources locales une fois configurées, tout en lui indiquant les informations de connexion à chacun des autres ressources fournies par les autres partenaires ; et, l'entité locale implémente chaque ressource locale partagée conformément à la configuration reçue de l'entité centrale et renvoie les informations de connexion demandées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :

- La figure 1 est une représentation schématique et générale d'une infrastructure de fédération de services ;
- La figure 2 est une représentation schématique d'un premier procédé de communication entre l'entité centrale et l'entité locale de l'infrastructure de la figure 1 ; et,
- La figure 3 est une représentation schématique d'un second procédé de communication entre l'entité centrale et l'entité locale de l'infrastructure de la figure 1 .

Généralités

L'invention porte sur une infrastructure de fédération de services comportant une entité centrale et une pluralité d'entités locales, chacune de ces entités locales étant associée à l'un des MNPs de la coalition.

Une entité est par exemple un ordinateur comportant des moyens de calcul, tels qu'un processeur, des moyens de mémorisation, tels qu'une mémoire, et des moyens de communication, comme une carte IP. La mémoire stocke notamment les instructions de programmes d'ordinateurs, en particulier des programmes dont l'exécution permet la mise en œuvre des procédés selon l'invention.

L'entité centrale est en charge de la planification de la mission commune. Elle a une vision globale des ressources partagées. Elle réagit dynamiquement afin de prendre en compte, au cours de la phase de réalisation de la mission commune, tout changement d'engagement relatif à un ressource partagée par un MNP. L'entité centrale, en fonction de ces informations, adapte dynamiquement la configuration courante et commande le redéploiement correspondant en informant les entités locales de chaque MNP.

Chaque entité locale a une vision locale de l'ensemble des ressources (partagées ou non) du MNP associé. Elle informe l'entité centrale des changements d'engagement et des nouveaux engagements que ce MNP peut souscrire sur les ressources partagées. Lors de la réception d'une configuration, elle commande les ressources du MNP de manière adaptée.

Avantageusement, l'entité centrale calcul non seulement une configuration principale, mais également des configurations alternatives ou de repli à partir de scénarios d'évolution possible des engagements des MNPs. De la sorte, en cas de désengagement d'un ou plusieurs MNPs sur tout ou partie des ressources partagées, l'entité centrale est capable de proposer rapidement de nouvelles configurations.

Ainsi, avec l'invention, on passe d'une gestion statique d'une fédération de services, à une gestion dynamique, en boucle lente.

Avec une telle planification dynamique, il est possible de reconfigurer l'ensemble des ressources de la fédération de services pour assurer la continuité de la réalisation de la mission commune ou l'évolution de cette mission au cours du temps.

L'invention porte sur les procédés de communication entre entité centrale et entités locales d'échange des différents engagements et changements d'engagement des MNPs d'une part et de configuration et de reconfiguration d'autre part pour permettre cette planification dynamique.

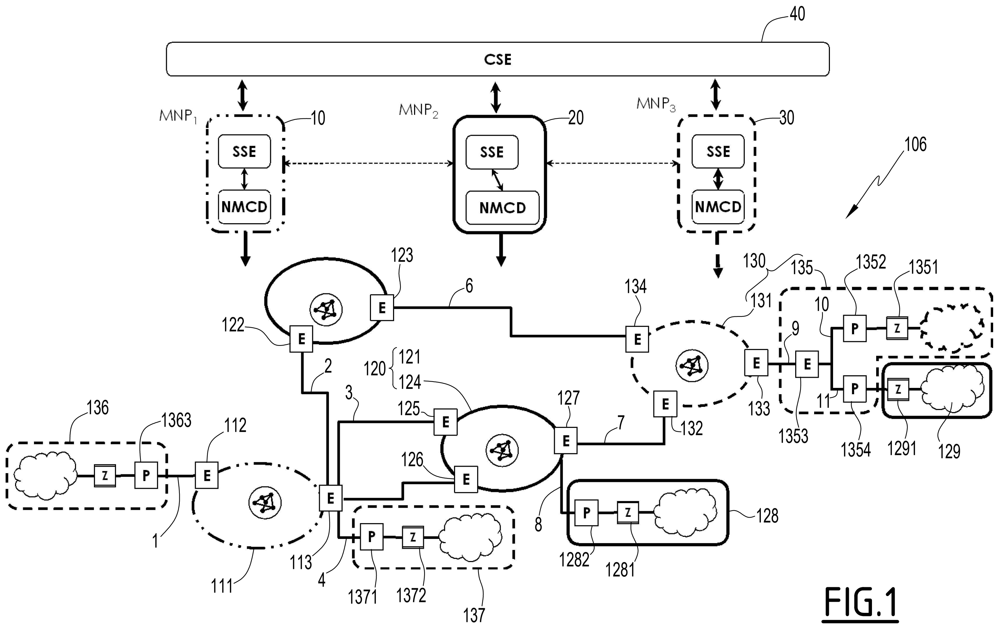

La figure 1 représente une infrastructure 100 de fédération de services.

L'infrastructure 100 comporte une entité centrale 40, une pluralité d'entités locales 10, 20 et 30, et, pour chaque partenaire - MNP de la coalition, une pluralité de ressources partagées parmi l'ensemble des ressources gérées par ce MNP. Sur la figure 1, seules les ressources partagées sont représentées.

L'entité centrale 40 est dénommée CSE (« Central SMC Operations Element »). Il s'agit d'un système du type gestion et de contrôle de services - SMC (« Service Management & Control »), plus particulièrement du type système de support fonctionnel - BSS (« Business Support Systems) / système de support opérationnel - OSS (« Operational Support System ») incluant une orchestration de services.

L'entité centrale 40 comporte notamment une base de données de catalogue, recensant l'ensemble des ressources partagées à l'instant courant par chaque MNP, ainsi que les engagements courants sur chacune de ces ressources. Cet inventaire permet au CSE 40 d'estimer en temps réel les besoins opérationnels (bande passante, charge CPU, usage mémoire ...) nécessaires.

L'entité centrale 40 est adaptée pour planifier dynamiquement la configuration de l'infrastructure de fédération de services 100, c'est-à-dire le paramétrage de chaque ressource partagée que chacun des MNP doit mettre en place pour répondre à la mission commune, dont la gestion a été attribuée à l'entité centrale 40.

Dans le mode de réalisation de la figure 1, la coalisation de partenaires rassemble trois partenaires, respectivement $MNP_1$, $MNP_2$ et $MNP_3$.

Chaque MNP gère une infrastructure locale comportant une pluralité de ressources locales pouvant être paramétrées. Une ressource locale est un moyen matériel ou logiciel local pouvant être placé dans un état particulier, c'est-à-dire paramétré d'une certaine façon, pour la réalisation d'une tâche participant à la fourniture d'un service.

Le $MNP_1$ partage avec la coalition une partie de ses ressources locales. Les ressources partagées 110 sont par exemple : des ressources de transit, à savoir un réseau 111, du type réseau de communication pour les opérations - RCO ou du type segment protégé de cœur de réseau - PCS (« Protected Core Segment »), et deux passerelles du type E, 112 et 113.

Le $MNP_2$ met à disposition de la coalition une fraction de ses ressources. Les ressources partagées 120 sont par exemple : des ressources de transit, à savoir un premier réseau 121 avec deux passerelles E, 122 et 123, et un second réseau 124 avec trois passerelles E, 125, 126 et 127 ; et des ressources d'application, à savoir un centre de données (data center) 128 muni d'une fonction de chiffrage 1281 et d'une passerelle P 1282 et d'un réseau de théâtre 129 muni d'une fonction de chiffrage 1291.

Le $MNP_3$ met à disposition de la coalition une fraction de ses ressources. Les ressources partagées 130 sont par exemple : des ressources de transit, à savoir un réseau 131 avec trois passerelles E, 132, 133 et 134 ; et des ressources d'application, à savoir :

- un premier centre de données 135 muni d'une passerelle E 1353, d'une passerelle P 1352 associée à une fonction de chiffrage 1351 d'une part et d'une passerelle P 1354 d'autre part ;
- un second centre de données 136 muni d'une passerelle P 1363 associée à une fonction de chiffrage 1362 ; et,
- un réseau de théâtre 137 muni d'une fonction de chiffrage 1371 et d'une passerelle P 1371.

Une passerelle est un point d'entrée sur un réseau. Une passerelle de type E (« E node ») peut voir plusieurs passerelles de type E ou du type P mais une passerelle de type P (« P-Node ») ne peut voir qu'une passerelle du type E.

Le transfert des données s'effectue soit le long d'une liaison interne à un réseau de transit, entre deux passerelles de ce réseau de transit, soit le long d'une liaison externe à un réseau de transit, entre une passerelle de ce réseau de transit et une passerelle soit d'un autre réseau de transit, soit d'un réseau de théâtre, soit d'un centre de données.

Chaque infrastructure locale gérée par un MNP est en outre équipée d'une entité locale. Ainsi, sur la figure 1, l'entité locale du premier $MNP_1$ est référencée 10, l'entité locale du second $MNP_2$ est référencée 20, et l'entité locale du troisième $MNP_3$ est référencée 30.

Chaque entité locale comporte un élément d'interface et un élément de contrôle.

L'élément de contrôle - NMCD (« Network Management Cyber Défense ») est en charge d'orchestrer les ressources locales du MNP, c'est-à-dire de paramétrer chaque ressource locale (partagée ou non) selon des informations de configuration qu'il reçoit. [A VERIFIER : fonction de ce composant ? Qui gérer le paramétrage des ressources non partagées ? ]

L'élément d'interface - SSE (« Subordinate SMCOPS Element ») est également un système du type gestion et de contrôle de services - SMC (« Service Management & Control »), plus particulièrement du type Système de Support Fonctionnel - BSS (« Business Support Systems) / Système de Support Opérationnel - OSS (« Operational Support System ») incluant une orchestration de services.

Le SSE communique avec d'une part l'élément de contrôle NMCD de l'entité locale, et d'autre part avec les entités extérieures que sont les SSE des autres entités locales des autres MNPs et l'entité centrale 40.

Le SSE contrôle l'élément NMCD en charge d'orchestrer l'infrastructure locale.

Chaque SSE comporte une base de données de catalogue, recensant l'ensemble des ressources locales, partagées ou non, ainsi que les engagements courants sur chacune de ces ressources partagées, les paramétrages de chacune de ses ressources. Cet inventaire permet au SSE d'estimer en temps réel les besoins opérationnels (bande passante, charge CPU, usage mémoire ...) nécessaires.

Le SSE et éventuellement le NMCD d'un MNP sont les seuls points d'entrée vers l'infrastructure locale du MNP pour les entités extérieures. Un SSE comme un NMCD n'admet aucunement qu'une entité extérieure prenne le contrôle d'une ressource locale de l'infrastructure locale qu'il gère. Dit autrement, chaque MNP reste souverain dans le contrôle ou les échanges avec les autres MNP et l'entité centrale - CSE.

L'infrastructure de fédération de services 100 est ainsi constituée, à l'instant courant, des moyens partagés par chaque MNP, de l'entité locale de chaque MNP et de l'entité centrale - CSE 40 de planification de la mission commune.

De manière générale, un accord de niveau de service - SLA (« Service Level Agreement ») est un engagement qui définit une prestation entre un fournisseur d'un service et un client. Un tel accord définit le niveau de service que souhaite obtenir le client de la part du fournisseur d'une ressource.

Un tel accord est caractérisé par une ou plusieurs grandeurs quantitatives notamment: la capacité minimum et maximum de la bande passante dans chacune des directions, la qualité de service, la latence, etc.

Dans ce qui suit, pour simplifier la description d'un mode de réalisation particulier, on considère essentiellement des SLAs sur chacun des liens de communication entre paire de passerelles de type P ou E. Typiquement, une telle SLA correspond à un pourcentage de la bande passante sur un lien interne ou externe entre deux passerelles.

Un MNP participe à la ou aux missions communes de la coalition de partenaires en plus de sa ou ses missions propres, comme une mission nationale de fourniture d'une couverture réseau mobile sur le territoire d'un pays.

L'entité locale d'un MNP gère et contrôle les ressources locales pour la mission propre du MNP envers les usagers de l'infrastructure local, mais contrôle uniquement les ressources locales pour la mission commune de la coalition envers les utilisateurs de l'infrastructure de fédération de services sur instruction de l'entité centrale. Il y a donc une délégation par l'entité locale de la gestion des ressources partagée à l'entité centrale. L'entité locale agit alors en tant qu'interface pour le déploiement de la configuration des ressources partagées dont elle est responsable.

Pour la continuité des services, le SSE doit fournir une réponse rapide en cas de situation de crise. En particulier, le SSE applique des règles prédéfinies.

Par exemple, avant un événement affectant la capacité du réseau de transit, 80% de la capacité était affectée à la mission propre et 20% à la mission commune. Après la survenue d'un évènement conduisant à une dégradation, la capacité totale est réduite de moitié. Le SSE décide de privilégier la mission propre au détriment de la mission commune (100% de la capacité restante est offerte à la mission propre et 0% à la mission commune).

Pour une ressource de transit, le SSE d'une entité locale n'expose au CSE que les informations permettant de garantir l'échange de données traversant le réseau géré et partagé par l'entité locale de l'infrastructure locale.

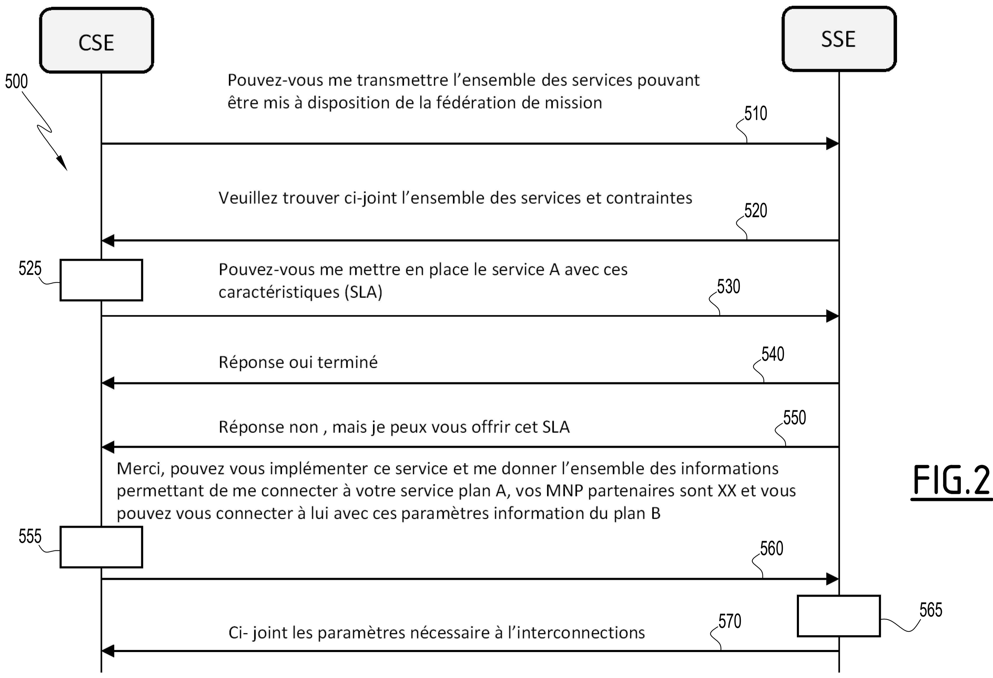

La Figure 2 illustre un procédé 500 de montage d'un service S mise en œuvre dans l'infrastructure de la figure 1.

Une mission commune est attribuée au CSE 40.

Elle comporte notamment une liste d'utilisateurs et, pour chaque utilisateur, un service attendu, avec un SLA attendu.

Pour la réalisation d'une mission commune, il faut d'abord identifier l'ensemble des ressources partagés par les MNPs de la coalition à l'instant courant.

A cette fin, dans une première étape 510, le CSE 40 interroge successivement chaque entité locale en lui demandant de lui transmettre l'ensemble des ressources pouvant être mis à disposition de la fédération de services.

Dans une étape 520, en réponse à cette requête initiale du CSE 40, le SSE d'un MNP, par exemple celui du MNP$_1$, répond en indiquant l'ensemble des ressources qu'il est prêt à partager, et pour chaque ressource partagée, un SLA maximum.

Le CSE 40 stocke les informations reçues dans sa base de données de catalogue.

Dans une étape 525 de planification proprement dite, le CSE 40 calcule une configuration permettant de remplir la mission commune.

Pour ce faire, le CSE 40 lit sa base de données de catalogue et élabore au moins une topologie de services à partir de l'ensemble des ressources partagées par les MNPs de la coalition, et les SLAs maximum pour chaque ressource partagée.

Sur cette topologie de services, le CSE 40 calcule des chemins permettant d'offrir à chaque utilisateur, le service qu'attend cet utilisateur conformément au SLA attendu.

Un chemin rassemble différentes ressources partagées, en particulier au moins une ressource de transit et une ressource d'application. Pour chaque ressource S du chemin, un SLA requis est calculé.

Puis, le CSE 40 commande les SSE pour déployer cette configuration. Ainsi, dans l'étape 530, le CSE 40 demande au SSE du MNP, ayant partagé la ressource S, de paramétrer cette ressource S avec le SLA requis.

Si le SSE peut effectivement s'engager à offrir le service S demandé avec la valeur de SLA requise, alors dans l'étape 540, le SSE répond positivement au CSE. Le MNP s'engage ainsi à fournir le service S avec le SLA requise.

Si en revanche, le SSE ne peut pas s'engager à offrir le service S avec la valeur de SLA requise, alors dans l'étape 550, le SSE répond négativement au CSE, tout en indiquant la nouvelle valeur de SLA maximum qu'il peut effectivement offrir pour le service S.

Ceci arrive par exemple lorsqu'entre l'étape 520 et la requête finale de l'étape 530, le service S, qui était également offert en partage pour la réalisation d'une autre mission commune, a été réservé (partiellement ou totalement) par le CSE gérant cette autre mission commune.

Suite à une réponse négative et une nouvelle valeur de SLA maximum pour le service S, le CSE 40 réitère, dans une étape 555, les calculs de l'étape 525. Il met éventuellement à jour la topologie de services et détermine si les chemins déjà calculés permettent encore la réalisation de la mission compte tenu de cette nouvelle valeur de SLA maximum pour le service S.

Dans l'étape 560, une fois que le CSE a reçu un engagement de chacun des SSEs pour l'ensemble des ressources d'un chemin, le CSE demande aux SSEs de configurer les ressources avec le SLA négocié.

De plus, le CSE demande à chaque SSE de lui indiquer l'ensemble des informations permettant la connexion à la ressource S une fois configurée, tout en lui indiquant les informations de connexion à chacun des autres ressources fournies par ces autres MNPs.

Dans une étape 565, le SSE d'un MNP se tourne vers le NMCD de l'entité locale pour implémenter la ressource S conformément à la valeur de SLA négociée. Après implémentation, le NMCD renvoie les paramétrages de la ressource S au SSE.

Dans l'étape 570, le SSE répond au CSE en indiquant les paramètres nécessaires à l'utilisation de la ressource S dans le cadre de la mission commune.

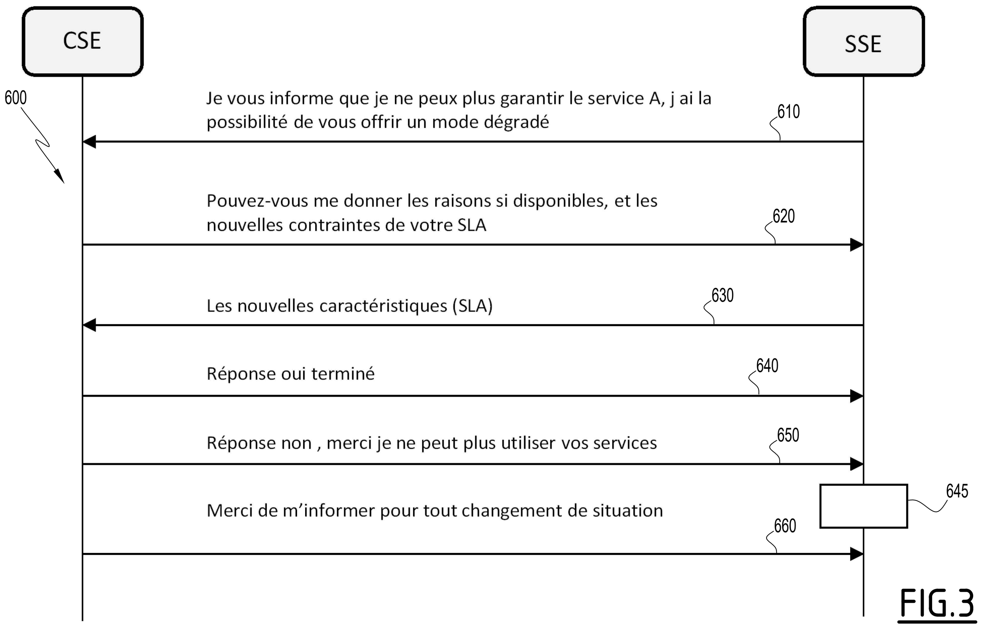

La Figure 3 illustre un procédé 600 de mise à jour d'un service au cours de la réalisation de la mission.

Dans l'étape 610, le SSE du MNP$_1$ informe le CSE 40 qu'il ne peut plus garantir l'engagement sur une ressource associée au service S, mais a la possibilité de partager cette ressource en mode dégradé, c'est-à-dire avec une valeur de SLA inférieure à celle initialement négociée.

Alors, dans l'étape 620, le CSE 40 demande les raisons de ce changement si elles sont disponibles, et le nouveau SLA maximum auquel la ressource peut être accessible.

Dans l'étape 630, le SSE du MNP répond en indiquant au moins le SLA maximum qu'il peut effectivement offrir (ce SLA peut éventuellement être nul si la ressource n'est plus du tout accessible).

Dans l'étape 640, si cette valeur de SLA dégradée est acceptable, le CSE 40 répond au SSE en lui indiquant de poursuivre son engagement sur le service S avec la nouvelle valeur de SLA poru la ressource en mode dégradée.

Dans une étape 645, le SSE se tourne vers le NMCD de l'entité locale pour réserver la ressource conformément à la nouvelle valeur de SLA négociée. Après ajustement du paramétrage, le NMCD renvoie les nouveaux paramétrages de la ressource au SSE.

Au contraire, si cette valeur de SLA dégradée est insuffisante, dans l'étape 650, le CSE 40 répond que la ressource ne peut plus être utilisée pour le service S de la mission commune. En conséquence, le SSE du MNP lève son engagement sur cette ressource.

Le CSE 40 demande dans une étape 660 d'être informé pour tout changement de situation à venir de la ressource (éventuel retour à la normal et/ou à une valeur de SLA maximum plus élevée).

Les étapes 525 à 565 sont alors exécutées à nouveau par le CSE pour identifier une nouvelle configuration.

L'étape de planification de mission 525, va maintenant être détaillée.

Elle est mise en œuvre par l'entité centrale - CSE 40 qui utilise les informations reçues les SSEs des MNPs stockées dans la base de catalogue.

A partir de ces informations, le CSE 40 est adapté pour construire une topologie de services candidate en établissant des liens possibles entre nœuds. Deux topologies candidates différent l'une de l'autre par les liens établis entre les nœuds.

Le CSE 40 est adapté pour rechercher des chemins sur une topologie candidate.

Un chemin est à la fois une route à travers la topologie candidate examinée pour la circulation d'un flux entre un nœud source et un nœud destinataire, mais également un SLA global associé à cette route. Un chemin est retenu lorsque le niveau de SLA global associé permet de garantir un niveau prédéfini par la mission commune.

Le CSE 40 calcule ainsi un ensemble de chemins permettant de satisfaire l'ensemble des attentes des utilisateurs.

L'ensemble de ces chemins permet de définir la configuration dans laquelle la fédération de services doit être placée pour la réalisation de la mission.

Plusieurs configurations alternatives (plan de mission A, B ou C) sont avantageusement calculées.

La configuration principale (plan A) est déployée. Pour ce faire, l'entité centrale - CSE 40 informe chaque entité locale - SSE de prendre l'ensemble des dispositions permettant d'implémenter, dans l'infrastructure de fédération de services, les chemins identifiés sur la topologie de services pour réaliser la mission commune.

Au cours de la mission, en cas de pertes capacitaires, le SSE effectue localement un changement de SLA (conformément aux règles de gouvernances auxquelles il est soumis).

Par exemple, il peut y avoir une attaque cyber, avec perte capacitaire. L'entité locale en charge du réseau de transit effectuera alors un ensemble d'actions permettant de garantir localement la survie des services (partagés ou non) dont il a la charge.

Dans un second temps, il informe le CSE 40 des changements ayant affecté les services qu'il partage avec les autres partenaires de la coalition.

C'est le CSE 40 en charge de la mission qui voit comment négocier ces changements avec l'ensemble des partenaires afin de répondre dynamiquement à cette évolution de manière à garantir la réalisation de la mission.

Notamment, pour répondre sans tarder à un évènement, le CSE 40 peut décider de déployer sans attendre une configuration secondaire (plan B ou plan C) préalablement calculées.

De la sorte, il est possible de redéfinir les rôles et attendus associés à une mission en cours de réalisation en répondant à l'urgence.

Ce mécanisme de d'abord reconfigurer l'infrastructure locale pour tenir compte de l'évènement puis ensuite de reconfigure l'infrastructure de fédération de services correspond à la nation de boucle lente.

Plus précisément, le CSE 40 exécute un algorithme qui construit au moins une topologie de services candidate. De préférence, il en construit plusieurs.

Une topologie de services candidate est un graphe constitué de nœuds et de liens. Un lien connecte deux nœuds.

Chaque nœud représente une ressource partagée (d'application ou de transit) de la fédération de services à l'instant courant considéré.

Un lien établit une relation entre deux nœuds, c'est-à-dire une association entre deux ressources partagées.

Les algorithmes pouvant être utilisés pour résoudre un tel problème de planification sont du type algorithme d'ingénierie de trafic sous contrainte. Il s'agit par exemple d'algorithmes d'optimisation linéaire en nombre entier - ILP ( « Integer Linear Programming »). Il s'agit par exemple de l'algorithme Q-Bate connu de l'homme du métier.

Dans l'exemple de ressources de transit, l'algorithme prend trois paramètres d'entrées :

- Un graphe G(N,L) représentant le réseau où N représente les nœuds (en l'occurrence les passerelles E et P) et L les liens (en l'occurrence connectant deux passerelles). A chaque lien L est associé un vecteur de dimension m, $\vec{W}$, représentant les SLAs que ce lien peut garantir. Ces SLAs peuvent être des métriques dîtes additives ou concaves. Elles seront traités différemment par l'algorithme. Dans le cas où une métrique multiplicative est considérée, elle peut être transformée en une métrique additive sans perte de généralité.

- Un ensemble de flux à router F où chaque flux est représenté par un triplet s, d et $\vec{Q}$, s représentant le nœud source du flux, d, le noeud destinataire du flux, et $\vec{Q}$ un vecteur de dimension m représentant les contraintes en termes de SLAs que ce flux nécessite.

- Un paramètre K, interne à algorithme définit le nombre de chemins alternatifs à considérer lors de la recherche d'une solution pour chaque flux. La solution exacte à ce problème d'optimisation est garantie si K est égal à la dimension du problème.

Cet algorithme renvoie les chemins calculés pour chacun des flux.

L'algorithme délivre en sortie un ou plusieurs plans de missions.

Il est possible de prioriser certains flux dits prioritaires parmi l'ensemble des flux de la mission commune. En indiquant cette priorisation à l'algorithme, un tri en fonction de la priorité peut être fait pour que les flux prioritaires soient d'abord traités de sorte à avoir moins de chance d'être rejetés car placés sur la fédération de services en premier.

Il est possible que l'algorithme ne trouve pas de solution pour acheminer un flux. Il le notifie alors en valeur de retour.

Les paramètres d'entrée et/ou certaines contraintes sur les flux sont alors modifiées, avant d'itérer l'exécution de l'algorithme pour tenter de trouver un chemin acceptable pour chaque flux.

Par exemple si une contrainte de niveau de confiance empêche la résolution, le SMC peut choisir de planifier des mesures de sécurité supplémentaire (e.g. déploiement d'un tunnel IPSec avec chiffrement renforcé) pour relâcher la contrainte de confiance.

Les SLA peuvent représenter des métriques concaves (e.g. bande passante, niveau de confiance entre partenaires) ou additives (latence, gigue...).

Une partie du graphe est déjà donné par les différents PCS constitués (à savoir l'ensemble des liens internes permettant de relier les passerelles), qui correspondent à des ressources déployées et partagées par les partenaires coalisés.

Pour compléter le graphe avec des liens externes afin de prendre en compte tous les réseaux fédérés planifiables possibles, des liens fictifs sont ajoutés qui sont les liens possibles entre les différents PCS.

Chacun de ces liens fictifs porte également une notion de SLA défini en fonction du moyen de transmission et des partenaires engagés dans ce lien externe.

Une fois ce graphe constitué, l'application de l'algorithme permet de calculer un ensemble de chemins possibles pour réaliser la mission commune.

Si des liens fictifs n'ont pas été utilisés par l'algorithme, ces liens sont considérés comme redondant et sont éliminés de l'ensemble des liens fictifs.

Les valeurs de sortie de l'algorithme et le graphe final (nettoyé des liens fictifs non utilisés) constituent une planification possible de la mission commune.

Lors de la recherche de chemins, l'algorithme calcule des chemins alternatifs (leur nombre est piloté par le paramètre K) pour l'ensemble des flux. Ces chemins alternatifs peuvent être stockés en mémoire pour proposer une planification alternative rapidement en cas de changement de topologie (e.g. perte de liens ou modification des SLA d'un lien).

Si les planifications alternatives ne sont pas suffisantes pour répondre à un changement de topologie, l'algorithme doit être relancé pour trouver une nouvelle planification, tout au moins pour les flux affectés par le changement de topologie.

Pour réduire le nombre de liens fictifs, il est possible de les introduire itérativement jusqu'à ce que le maximum de flux puisse être placés au prix d'un plus grand temps de calcul. Alternativement, il est possible après un premier calcul avec l'ensemble des liens d'élaguer les liens fictifs (e.g. des liens portant peu de flux) pour tenter de réduire le nombre de liens fictifs nécessaires (cette optimisation peut être utile si un nœud est limité en termes de nombre de liens possibles).

L'algorithme prend par exemple en entrée :

- Les SLA attendus entre différentes passerelles de type P (contraintes SLAs et contrainte connectivité) ;
- La liste des passerelles de type E sur lesquels les passerelles de type P sont raccordées (topologie de services pour matrice d'adjacence) ;
- Les SLAs offerts par un réseau de transit entre deux passerelles de bordures (topologie de services pour matrice d'adjacence) ;
- Les liens possibles entre différentes passerelles de type E avec les SLA associés (par exemple lien Inmarsat, LAN...) (topologie de service pour matrice d'adjacence)
- Le nombre maximum de connecteurs d'une passerelle de type E (contraintes). L'algorithme délivre par exemple en sortie :
- Les chemins p qui respectent les SLAs indiqués en entrée ;
- Les liens externes à utiliser pour respecter les SLAs (liens entre passerelles de type E ou P).

La connectivité (liens externes) entre les différents nœuds peut avantageusement être exprimée sous la forme de variables de décision booléennes. Ces variables de décision sont utilisées dans une fonction d'objectif, dont le but est de minimiser le nombre de liens à utiliser ou une métrique associée aux liens.

Un tel algorithme peut avantageusement être enrichi afin de prévoir des chemins de repli en cas de panne d'un ou plusieurs liens externes de manière à être à même de réagir en boucle rapide.

En variante, on peut prendre en compte l'accès à un service utilisateur. Dans ce cas, une contrainte supplémentaire est ajoutée correspondant à la présence d'un service sur un nœud (en plus d'un besoin en SLA réseau). Cette contrainte supplémentaire est remplie si n'importe lequel des utilisateurs peut accéder à au moins une instance du service utilisateur avec une certaine garantie en termes de SLA réseau.

La valeur de SLA global d'un chemin est donnée par la liste des services constitutifs de ce chemin p= (i,j,k,...,l,m) et une métrique d(i,j) pour chaque lien (i,j) entre deux services successifs du chemin p:
Pour une métrique additive (par exemple pour la latence), la valeur de SLA du chemin p est donnée par :
SLA(p) = d(i,j) + d(j,k) + ... + d(l,m).

Pour une métrique multiplicative (par exemple pour la probabilité de transmission d'un paquet) : SLA(p) = d(i,j) x d(j,k) x ... x d(l,m)

Une métrique multiplicative peut être transformée en une métrique additive par passage logarithme.

Pour une métrique concave (par exemple pour la bande passante d'un chemin : SLA(p) = min [d(i,j),d(j,k),...,d(l,m)]

Ainsi, l'entité centrale - CSE 40 se fonde sur un ensemble de SLAs pour définir une configuration de l'ensemble des ressources (matériels et logiciels) mises à disposition de la coalition de partenaires.

Par exemple, sur la figure 1, pour relier l'utilisateur U à un service d'application App, le CSE 40 définit les routes possibles suivantes :

Route 1: liens 1, 2, 6, 9 et 10.
Route 2: liens 1, 3, 7, 9 et 10.
Route 3: liens 1, 5, 7, 9 et 10.
Route 4: liens 1 et 4.

Il détermine alors un plan de mission A pour la mission :
Une mission M est la somme des services pour des utilisateurs finaux. Pour une configuration A :

$$\text{M}_A = \sum_1^n Service\ n$$

$$\text{M}_A = \text{SLA}_A$$

$\text{SLA}_A = \text{SLA}_{route\ 1}$ or $\text{SLA}_{route\ 2}$ or $\text{SLA}_{route\ 2}$ or $\Sigma\,(\text{SLA}_{route\ 1}, \text{SLA}_{route\ 2}, \text{SLA}_{route\ 3})$ or $\Sigma\,(\text{SLA}_{route\ 1}, \text{SLA}_{route\ 2})$ or $\Sigma\,(\text{SLA}_{route\ 1}, \text{SLA}_{route\ 3})$ or $\Sigma\,(\text{SLA}_{route\ 2}, \text{SLA}_{route\ 3})$ et $\text{SLA}_{route\ 4}$

Où

$$\text{SLA}_{route\ k} = \text{Min}_i\,(\text{SLA}_{lien\ i})$$

Il détermine avantageusement un plan de mission B pour la mission :

$$\text{M}_B = \sum_1^n Service\ n$$

$$\text{M}_B = \text{SLA}_B$$

$\text{SLA}_B = \text{SLA}_{route\ 8}$ or $\text{SLA}_{route\ 9}$ or $\text{SLA}_{route\ 10}$ or $\Sigma\,(\text{SLA}_{route\ 8}, \text{SLA}_{route\ 9}, \text{SLA}_{route\ 10})$ or $\Sigma\,(\text{SLA}_{route\ 8}, \text{SLA}_{route\ 9})$ or $\Sigma\,(\text{SLA}_{route\ 8}, \text{SLA}_{route\ 10})$ or $\Sigma\,(\text{SLA}_{route\ 9}, \text{SLA}_{route\ 10})$ et $\text{SLA}_{route\ 11}$

Il détermine avantageusement un plan de mission C pour la mission :

$$\text{M}_C = \sum_1^n Service\ n$$

$$\text{M}_C = \text{SLA}_C$$

$\text{SLA}_C = \text{SLA}_{route\ 8}$ or $\text{SLA}_{route\ 9}$ or $\text{SLA}_{route\ 10}$ or $\Sigma\,(\text{SLA}_{route\ 8}, \text{SLA}_{route\ 9}, \text{SLA}_{route\ 10})$ or $\Sigma\,(\text{SLA}_{route\ 8}, \text{SLA}_{route\ 9})$ or $\Sigma\,(\text{SLA}_{route\ 8}, \text{SLA}_{route\ 10})$ or $\Sigma\,(\text{SLA}_{route\ 9}, \text{SLA}_{route\ 10})$ et $\text{SLA}_{route\ 11}$

L'invention permet ainsi in fine de garantir un ensemble de SLAs de service de bout en bout pour les participants de la mission, utilisateurs finaux et MNP coalisés.

Le CSE 40 est chargé de définir l'ensemble des règles de commande, de déploiement et de configuration de tous les services de bout en bout d'une ou plusieurs configurations à destination des utilisateurs finaux.

Avantageusement, l'entité centrale 40 peut considérer des contraintes supplémentaires comme des contraintes de criticité, de sécurité, de priorisation, etc. Ces contraintes sont exprimées sous forme de SLAs.

Elle peut aussi prendre en compte des indicateurs de qualité remontés notamment par le NMP en charge du dernier nœud d'un chemin qui est le mieux placer pour évaluer à chaque instant ce chemin et détecter la survenu d'un évènement dégradant le SLA global de ce chemin.

L'entité centrale peut définir plusieurs valeurs de SLA global : Une valeur de planification ; Une valeur d'utilisation réel ; Une valeur de prédiction ; Des valeurs d'estimations permettant d'évaluer la meilleure solution à prendre en cas de dégradations.

Par exemple, un MNP ségrègue les flux circulant sur ses ressources de transit entre données dite « rouge » (correspondant à un domaine de sécurité haut) et données dites « noire » (correspondant à un domaine de sécurité bas).

L'entité locale du MNP peut alors attribuer une priorité élevée au données de ses utilisateurs nationaux (en considérant ces données comme des données « rouge ») pour les privilégier sur les données des utilisateurs de la fédération de services, qui sont alors considérées comme des données « noir ».

Le SSE d'une entité locale d'un MNP à la capacité d'échanger des informations avec les SSE des entités locales des autres MNPs, non seulement d'échanger les engagements SLA des ressources partagées, mais aussi les alertes de défaillance des ressources partagées, des catalogues de services ...

La NMCD d'une entité locale d'un MNP peut éventuellement également partager certaines informations avec les NMCD des entités locales des autres MNPs, afin de permettre une interconnexion automatique ou un échange de statuts entre ressources. Ces informations sont par exemple des données de topologie.

Si dans le mode de réalisation préféré présenté précédemment, le système intègre une unique entité centrale - CSE, celle-ci étant dédiée à la planification dynamique d'une mission commune ou partagée, en variante, une entité centrale - CSE est responsable de la planification dynamique de plusieurs missions communes, de préférence du même type (médicale, observation radar, etc.).

Dans une autre variante, le système comporte plusieurs entités centrales, chacune d'entre elles étant dédiée à la planification dynamique d'une mission commune qui lui est propre.

Le CSE peut gérer les demandes d'instanciation de services d'application. Dans ce cas, la présence ou non d'une application sur un nœud est exprimée au moyen d'une variable de décision, les contraintes étant alors la capacité d'un nœud à héberger ladite application, en termes de capacité de calcul, capacité mémoire, etc.

Le mécanisme de planification dynamique selon l'invention permet d'offrir, à chaque instant de la réalisation de la mission commune, la meilleure qualité d'expérience aux utilisateurs compte tenu de l'ensemble des possibilités offertes.

L'invention propose un mécanisme de planification dynamique permettant d'offrir les mécanismes de boucle lente pour offrir à chaque instant la meilleure qualité d'expérience aux utilisateurs acteurs de la mission commune, tout en prenant en compte l'ensemble des possibilités offertes par les partenaires.

**Revendications**

1. Infrastructure de fédération de services (100) comportant des ressources partagées par une pluralité de partenaires (MNP1, MNP2, MNP3) formant une coalition, chaque partenaire opérant une infrastructure locale comportant une pluralité de ressources locales, un partenaire décidant de partager, à un instant courant, certaines desdites ressources locales avec les autres partenaires de manière à former l'infrastructure de fédération de services, chaque infrastructure locale comportant une entité locale (10, 20, 30) adaptée pour contrôler un état de chaque ressource locale, l'infrastructure de fédération de services (100) comportant, en outre, une entité centrale (40), qui est en communication avec chacune des entités locale (10, 20, 30) des infrastructures locales,

l'entité centrale (40) étant adaptée pour :

- tenir à jour un catalogue des ressources partagées à l'instant courant par chaque partenaire, un engagement de chaque ressource partagée, et un état courant de chaque ressource partagée en échangeant avec les entités locales (10, 20, 30) ;
- calculer une planification courante, à partir du contenu du catalogue des ressources partagées, permettant de réaliser une mission commune prédéfinie à partir des ressources partagées à l'instant courant et de l'état courant des ressources partagées ; et,
- déployer une configuration correspondant à la planification courante en demandant, pour chaque ressource partagée entrant dans la configuration courante, à l'entité locale responsable de ladite ressource partagée de paramétrer ladite ressource partagée selon la configuration,

chaque entité locale (10, 20, 30) étant adaptée pour :

- tenir à jour un catalogue des ressources locales, partagées et non partagées, à l'instant courant, un engagement de chaque ressource locale partagée, et un état courant de chaque ressource locale ;
- informer l'entité centrale d'un engagement pouvant être pris sur chaque ressource locale partagée ; et,
- paramétrer chaque ressource locale partagée conformément à la configuration reçue de l'entité centrale.

2. Infrastructure selon la revendication 1, dans laquelle un service est l'ensemble des ressources, matérielles et logicielles, mises en œuvre et convenablement paramétrées pour offrir tout ou partie d'une fonctionnalité particulière, un service étant soit un service de transit soit un service d'application.

3. Infrastructure selon la revendication 1 ou la revendication 2, dans laquelle l'entité centrale et chaque entité locale est un système informatique du type gestion et de contrôle de services, adossé à un catalogue de ressources.

4. Infrastructure selon l'une quelconque des revendications 1 à 3, dans laquelle un engagement d'une ressource partagée est un accord de niveau de service **caractérisé par** au moins une grandeur quantitative.

5. Infrastructure selon la revendication 4, dans laquelle ladite au moins une grandeur quantitative est sélectionnée parmi : une capacité minimum et une capacité maximum de bande passante, une qualité de service, une latence, une criticité, une sécurité, une priorisation, une capacité de calcul, et une capacité mémoire.

6. Infrastructure selon l'une quelconque des revendications 1 à 5, dans laquelle l'entité centrale (40) calcule une planification courante en exécutant un algorithme du type algorithme d'ingénierie de trafic sous contrainte.

7. Infrastructure selon la revendication 6, dans laquelle l'algorithme prend en entrée au moins une topologie de services candidate et un ensemble de flux à acheminer entre un service source et un service destinataire.

8. Infrastructure selon l'une quelconque des revendications 6 à 7, dans laquelle l'algorithme prend également en entrée un paramètre définissant un nombre de chemins alternatifs à considérer sur la topologie de services candidate lors de la recherche d'une solution d'acheminement de chaque flux.

9. Infrastructure selon l'une quelconque des revendications 1 à 8, dans laquelle la mission commune définit, pour chaque utilisateur de l'infrastructure de fédération de services un attendu.

10. Infrastructure selon l'une quelconque des revendications 1 à 9, dans laquelle la planification courante regroupe une topologie de services et pour chaque flux un engagement global.

11. Infrastructure selon l'une quelconque des revendications 1 à 10, dans laquelle chaque entité locale comporte un élément d'interface et un élément de contrôle, l'élément de contrôle étant en charge d'orchestrer les ressources locales du partenaire et l'élément d'interface contrôlant l'élément de contrôle et échangeant avec l'entité centrale et éventuellement avec les entités locales des autres partenaires.

12. Procédé de déploiement d'une configuration courante dans une infrastructure de fédération de services conforme à l'une quelconque des revendications 1 à 11, le procédé comportant les étapes de :

- l'entité centrale interroge chaque entité locale en lui demandant de lui transmettre l'ensemble des ressources pouvant être mis à disposition de la fédération de services ;
- en réponse, l'entité locale de chaque partenaire, indique l'ensemble des ressources qu'il est prêt à partager, et pour chaque ressource partagée, un engagement maximal possible ;
- l'entité centrale stocke les informations reçues dans son catalogue ;
- l'entité centrale calcule une planification permettant de remplir la mission commune ;
- l'entité centrale demande à chaque entité locale de chaque partenaire si elle peut déployer la configuration correspondant à la planification calculée ;
- si l'entité locale peut effectivement s'engager à réserver la ressource locale selon l'engagement requis, alors l'entité locale répond positivement à l'entité centrale et si l'entité locale ne peut pas s'engager à réserver la ressource locale selon l'engagement requis, l'entité locale répond négativement à l'entité centrale, tout en indiquant un nouvel engagement maximal ;
- en cas de réponse négative, l'entité centrale réitère met à jour la planification en fonction du nouvel engagement maximal ;
- une fois que l'entité centrale a reçu une réponse positive de chacune des entités locales, l'entité centrale commande chaque entité locale pour déployer la configuration correspondant à la planification finale et lui demandant de lui indiquer l'ensemble des informations permettant la connexion aux ressources locales une fois configurées, tout en lui indiquant les informations de connexion à chacun des autres ressources fournies par les autres partenaires ; et,
- l'entité locale implémente chaque ressource locale partagée conformément à la configuration reçue de l'entité centrale et renvoie les informations de connexion demandées.

**FIG.1**

FIG.2

CSE

SSE

600

Je vous informe que je ne peux plus garantir le service A, j ai la
possibilité de vous offrir un mode dégradé                          610

Pouvez-vous me donner les raisons si disponibles, et les
nouvelles contraintes de votre SLA                                  620

Les nouvelles caractéristiques (SLA)                          630

Réponse oui terminé                                     640

Réponse non , merci je ne peut plus utiliser vos services      650

                                                                645

Merci de m'informer pour tout changement de situation
                                                          660

FIG.3

EP 4 769 145 A1

Europäisches
Patentamt

European
Patent Office

Office européen
des brevets

## RAPPORT DE RECHERCHE EUROPEENNE

**Numéro de la demande**

EP 25 22 7499

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2016/057036 A1 (HEWLETT PACKARD ENTPRISE DEVELOPMENT LP) 14 avril 2016 (2016-04-14) * abrégé * * alinéas [0009] - [0010], [0013], [0018], [0024] * ----- | 1-12 | INV. G06F9/50 |
| A | WO 2011/067029 A1 (INTERNATIONAL BUSINESS MACHINES CORPORATION) 9 juin 2011 (2011-06-09) * le document en entier * ----- | 1-12 | |
| A | WO 2021/089159 A1 (TELEFONAKTIEBOLAGET LM ERICSSON (PUBL)) 14 mai 2021 (2021-05-14) * le document en entier * ----- | 1-12 | |
| A | WO 2013/112833 A2 (COMPUTENEXT INC.) 1 août 2013 (2013-08-01) * le document en entier * ----- | 1-12 | |
| A | ROBERT BOHN: "DRAFT STANDARD FOR INTERCLOUD INTEROPERABILITY AND FEDERATION (SIIF)", IEEE DRAFT WGDS , vol. 2302 7 octobre 2019 (2019-10-07), pages 1-44, XP068244181, Extrait de l'Internet: URL:https://ieee-sa.imeetcentral.com/p/aQA AAAAD9Svb [extrait le 2021-09-13] * le document en entier * ----- | 1-12 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| La Haye | 28 avril 2026 | Tomàs Blanch, F |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 22 7499

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-04-2026

| Document brevet cité au rapport de recherche | Date de publication | Membre(s) de la famille de brevet(s) | | Date de publication |
|---|---|---|---|---|
| WO 2016057036 A1 | 14-04-2016 | TW | 201633746 A | 16-09-2016 |
| | | US | 2017206114 A1 | 20-07-2017 |
| | | WO | 2016057036 A1 | 14-04-2016 |
| WO 2011067029 A1 | 09-06-2011 | CN | 102640475 A | 15-08-2012 |
| | | DE | 112010003819 T5 | 02-08-2012 |
| | | GB | 2488253 A | 22-08-2012 |
| | | JP | 5680105 B2 | 04-03-2015 |
| | | JP | 2013513139 A | 18-04-2013 |
| | | US | 2011137805 A1 | 09-06-2011 |
| | | WO | 2011067029 A1 | 09-06-2011 |
| WO 2021089159 A1 | 14-05-2021 | CN | 114868113 A | 05-08-2022 |
| | | EP | 4055478 A1 | 14-09-2022 |
| | | US | 2022391244 A1 | 08-12-2022 |
| | | WO | 2021089159 A1 | 14-05-2021 |
| WO 2013112833 A2 | 01-08-2013 | EP | 2812808 A2 | 17-12-2014 |
| | | US | 2013198386 A1 | 01-08-2013 |
| | | WO | 2013112833 A2 | 01-08-2013 |

EPO FORM P0460

Pour tout renseignement concernant cette annexe : voir Journal Officiel de l'Office européen des brevets, No.12/82